Europäisches Patentamt

European Patent Office

Office européen des brevets

(19)

(11) **EP 0 992 008 B1**

(12) **EUROPEAN PATENT SPECIFICATION**

(45) Date of publication and mention
of the grant of the patent:
**07.11.2001 Bulletin 2001/45**

(51) Int Cl.7: **G06F 17/27**

(86) International application number:
**PCT/EP98/04153**

(21) Application number: **98941289.5**

(22) Date of filing: **06.07.1998**

(87) International publication number:
**WO 99/01828 (14.01.1999 Gazette 1999/02)**

(54) **Finite State Transducers APPROXIMATING HIDDEN MARKOV MODELS (HMM) AND TEXT TAGGING USING SAME**

Hidden-Markov-Modelle (HMM) approximierende endliche Transducer und ihre Verwendung zum Text-Tagging

TRANSDUCTEURS D'ETATS FINIS DERIVES DE MODELES DE MARKOV CACHES (HMM) ET ASSIGNATION DE DESCRIPTEURS A UN TEXTE AU MOYEN DES PREMIERS

(84) Designated Contracting States:
**DE FR GB**

(30) Priority: **04.07.1997 GB 9714126**
**14.01.1998 GB 9800791**

(43) Date of publication of application:
**12.04.2000 Bulletin 2000/15**

(73) Proprietor: **XEROX CORPORATION**
**Rochester, New York 14644 (US)**

(72) Inventor: **KEMPE, André**
**F-38330 Biviers (FR)**

(74) Representative: **Grünecker, Kinkeldey,**
**Stockmair & Schwanhäusser Anwaltssozietät**
**Maximilianstrasse 58**
**80538 München (DE)**

(56) References cited:
**US-A- 5 610 812**

• **A. KEMPE: "Finite State Transducers Approximating Hidden Markov Models." PROCEEDINGS OF THE 35TH ANNUAL MEETING OF THE ASSOCIATION FOR COMPUTATIONAL LINGUISTICS, 7 - 12 July 1997, pages 460-467, XP002085043 Madrid, Spain**

• **A. KEMPE: "Look-Back and Look-Ahead in the Conversion of Hidden Markov Models into finite state transducers." PROCEEDINGS OF THE JOINT CONFERENCE ON NEW METHODS IN LANGUAGE PROCESSING AND COMPUTATIONAL NATURAL LANGUAGE LEARNING, 15 - 17 January 1998, pages 29-37, XP002085044 Sydney, (http://www.xrce.xerox.com/publis/mltt/mlt tart.html)**

• **CHARNIAK E: "Statistical techniques for natural language parsing" AI MAGAZINE, WINTER 1997, AMERICAN ASSOC. ARTIFICIAL INTELLIGENCE, USA, vol. 18, no. 4, pages 33-44, XP002085045 ISSN 0738-4602**

• **PEREIRA F ET AL: "WEIGHTED RATIONAL TRANSDUCTION AND THEIR APPLICATION TO HUMAN LANGUAGE PROCESSING" HUMAN LANGUAGE TECHNOLOGY. PROCEEDINGS OF A WORKSHOP,1 January 1994, pages 262-267, XP000571116**

• **TAPANAINEN P ET AL: "Syntactic Analysis of Natural Language using Linguistic Rules and Corpus-Based Patterns" PROCEEDINGS OF THE FIFTEENTH INTERNATIONAL CONFERENCE ON COMPUTATIONAL LINGUISTICS (COLING94) , vol. 1, 1994, pages 629-634, XP002085046 Kyoto, Japan**

• **ROCHE E ET AL: "Deterministic part-of-speech tagging with finite-state transducers" COMPUTATIONAL LINGUISTICS, JUNE 1995, USA, vol. 21, no. 2, pages 227-253, XP002085047 ISSN 0891-2017**

EP 0 992 008 B1

- **KAPLAN R M ET AL: "REGULAR MODELS OF PHONOLOGICAL RULE SYSTEMS" COMPUTATIONAL LINGUISTICS, vol. 20, no. 3, 1 September 1994, pages 331-378, XP000569407**

- **RABINER L R: "A tutorial on hidden Markov models and selected applications in speech recognition" PROCEEDINGS OF THE IEEE, FEB. 1989, USA, vol. 77, no. 2, pages 257-286, XP002085048 ISSN 0018-9219**

**Description**

The present invention relates to computer-based text processing, and more particular techniques for part-of-speech tagging by finite state transducer (FST) derived from a Hidden Markov Model (HMM).

Part-of-speech tagging of machine-readable text, whereby tags are applied to words in a sentence so as to identify a word's part-of-speech (e.g. noun-singular, verb-present-1st person plural), are known. Such tags are typically of a standardised form, such as specified under the Text Encoding Initiative (TEI). A text or corpus, once tagged, finds use, for example, in information retrieval from the text and statistical analysis of the text.

"Deterministic part-of-speech tagging with finite-state transducers" by Roche E. et al (Computational Linguistics, June 1995, USA, vol. 21, no. 2, pages 227-253, ISSN 0891-2017) discloses transducers which include a lexical tagger, an unknown word tagger and a contextual tagger. The contextual tagger, which receives tags as input and provides tags as output, is constructed by turning each contextual rule into a finite-state transducer; then turning the transducers into transducers that operate globally on the input in one pass; then combining all transducers into a single transducer, such as by composition; and then transforming the resulting transducer into an equivalent subsequential (deterministic) transducer.

"Weighted rational transductions and their application to human language processing" by Pereira F. et al (Human language technology, workshop proceedings, January 1, 1994, pages 262.267) teaches that each transduction in a cascade is often modelled by a finite-state device, such as a Hidden Markov Model. Hidden Markov Models and probabilistic finite-state language models can be shown to be equivalent to weighted finite-state acceptors. A conventional HMM decoder can be naturally viewed as equivalent to a cascade of weighted transductions.

Probabilistic HMM based taggers are known from Bahl and Mercer (1976) and Church (1988); see Section H: References at the end of this disclosure. They select among the part-ofspeech tags that are found for a word in the dictionary, the most probable tag based on the word's context, i.e. based on the adjacent words.

However, a problem with a conventional HMM based tagger is that it cannot be integrated with other finite state tools which perform other steps of text analysis/manipulation.

One method is to generate an FST performing part-of-speech tagging from a set of rules written by linguists (Chanod and Tapanainen, 1995). This, however, takes considerable time and produces very large automata (or sets of automata that cannot be integrated with each other for reasons of size) which perform the tagging relatively slowly. Such an FST may also be non-deterministic, i.e. for an input sentence it may provide more than one solution or no solutions at all.

The present invention provides methods to approximate a Hidden Markov Model (HMM) used for part-of-speech tagging, by a finite-state transducer. (An identical model of an HMM by a transducer (without weights) is in many cases impossible.) In specific embodiments there are provided (a) a method (called n-type approximation) of deriving a simple finite-state transducer which is applicable in all cases, from HMM probability matrices, (b) a method (called s-type approximation) for building a precise HMM transducer for selected cases which are taken from a training corpus, (c) a method for completing the precise (s-type) transducer with sequences from the simple (n-type) transducer, which makes the precise transducer applicable in all cases, and (d) a method (called b-type approximation) for building an HMM transducer with variable precision which is applicable in all cases.

The invention provides a method of generating a text tagging FST according to any of claims 1, 5 and 9 of the appended claims, or according to any of the particular embodiments described herein.

The invention further provides a method of generating a composite finite state transducer by composing the HMM-derived FST with one or more further text-manipulating FSTs.

The invention further provides a method of tagging a text using the aforementioned HMM-derived FST or the composite FST.

The invention further provioes a text processing system according to claim 11 of the appended claims, and a recordable medimn accoroing to claim 12 of the appended claims.

The HMM transducer builds on the data (probability matrices) of the underlying HMM. The accuracy of the data collected in the HMM training process has an impact on the tagging accuracy of both the HMM itself and the derived transducer. The training of this HMM can be done on either a tagged or untagged corpus, and is not discussed in detail herein since it is exhaustively described in the literature (Bahl and Mercer, 1976; Church, 1988).

An advantage of Finite-State taggers according to the invention is that tagging speed when using transducers is up to five times higher than when using the underlying HMM (cf. section F hereinbelow).

However, a main advantage of the invention is that integration with tools performing further steps of text analysis is possible: transforming an HMM into a FST means that this transducer can be handled by the finite state calculus and therefore directly integrated into other finite-state text processing tools, such as those available from XEROX Corp., and elsewhere. Since the tagger is in the middle of a chain of text analysis tools where all the other tools may be finite-state-based (which is the case with text processing tools available from XEROX Corp.), converting the HMM into an FST makes this chain homogeneous, and thus enables merging the chain's components into one single FST, by means of composition.

In particular, it is possible to compose the HMM-derived transducer with, among others, one or more of the following transducers that encode:

- correction rules for the most frequent tagging errors in order to significantly improve tagging accuracy. These rules can either be extracted automatically from a corpus (Brill, 1992) or written manually (Chanod and Tapanainen, 1995). The rules may include long-distance dependencies which are usually not handled by HMM taggers.
- further steps of text analysis, e.g. light parsing or extraction of noun phrases or other phrases (Ait-Mokhtar and Chanod, 1997).
- criteria which decide on the relevance of a corpus with respect to a particular query in information retrieval (e.g. occurrence of particular words in particular syntactic structures).

These transducers can be composed separately or all at once (Kaplan and Kay, 1994). Such composition enables complex text analysis to be performed by a single transducer: see EP-A-583,083.

It will be appreciated that the algorithms described herein may find uses beyond those discussed with respect to the particular embodiments discussed below: i.e. on any kind of analysis of written or spoken language based on both finite-state technology and HMMs, such as corpus analysis, speech recognition, etc. The algorithms have been fully implemented.

Embodiments of the invention will now be described, by way of example, with reference to the accompanying drawings, in which:

Figure 1 illustrates decisions on tags with an n-type transducer, according to one embodiment of the invention;
Figure 2 illustrates schematically the generation of an n-type transducer in accordance with an embodiment of the invention;
Figure 3 illustrates the procedure of building an n-type transducer in accordance with an embodiment of the invention;
Figure 4 is a diagram illustrating class subsequences of a sentence;
Figure 5 is a schematic diagram of the steps in the procedure of building an s-type transducer, in accordance with an alternative embodiment of the invention;
Figure 6 is a diagram illustrating the disambiguation of classes between two selected tags;
Figure 7 is a diagram illustrating valid paths through the tag space of a sentence.
Figure 8 is a diagram illustrating b-type sequences.
Figure 9 is a schematic flow chart illustrating the procedure of building a b-type transducer;
Figure 10 is an illustration of the tagging of a sentence using either the n-type transducer formed in Fig. 3 or the s-type transducer formed in Fig. 5 or the b-type transducer formed in Fig. 9; and
Figure 11 is a schematic flow chart of the steps involved in the procedure, in accordance with an embodiment of the invention, of tagging a text corpus with a finite state tagger using an HMM transducer.

**A. System configuration**

It will be appreciated that the techniques according to the invention may be employed using conventional computer technology. It will be appreciated that the invention may be implemented using a PC running Windows™, a Mac running MacOS, or a minicomputer running UNIX, which-are well known in the art. For example, the PC hardware configuration is discussed in detail in *The Art* of *Electronics,* 2nd Edn, Ch. 10, P. Horowitz and W. Hill, Cambridge University Press, 1989. The invention has been implemented in C on a Sun Sparc 20 workstation running UNIX.

**B. FST derivation**

The invention will be described in by reference to three methods of deriving a transducer for part-of-speech tagging from an HMM. These methods and transducers are referred to herein as *n-type, s-type and b-type.*

An HMM used for tagging encodes, like a transducer, a relation between two languages. One language contains sequences of ambiguity classes obtained by looking up in a lexicon all the words of a sentence. The other language contains sequences of tags obtained by statistically disambiguating the class sequences. From outside, an HMM tagger behaves like a sequential transducer that deterministically maps every sequence of ambiguity classes (corresponding to a sentence) into a unique sequence of tags, e.g.:

[DET] [ADJ,NOUN] [ADJ,NOUN] ...... [END]

DET     ADJ      NOUN   ...... END

**C.** n-Type Transducers

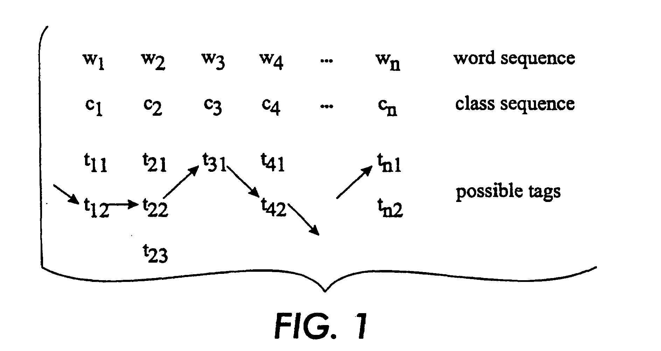

This section presents a method that approximates a first order Hidden Markov Model (HMM) by a finite state transducer (FST), referred to as an n-type approximation. Figure 1 illustrates decisions on tags with an n-type transducer, according to one embodiment of the invention.

As in a first order HMM we take into account initial probabilities $\pi$, transition probabilities a and class (i.e. observation symbol) probabilities $b$. However, probabilities over paths are not estimated. Unlike in an HMM, once a decision is made, it influences the following decisions but is itself irreversible.

Figure 1 illustrates this behaviour with an example: for the class $c_1$ of word $w_1$, tag $t_{12}$ is selected which is the most likely tag in an initial position. For word $w_2$, the tag $t_{22}$, the most likely tag, is selected given class $c_2$ and the previously selected tag $t_{12}$, etc.

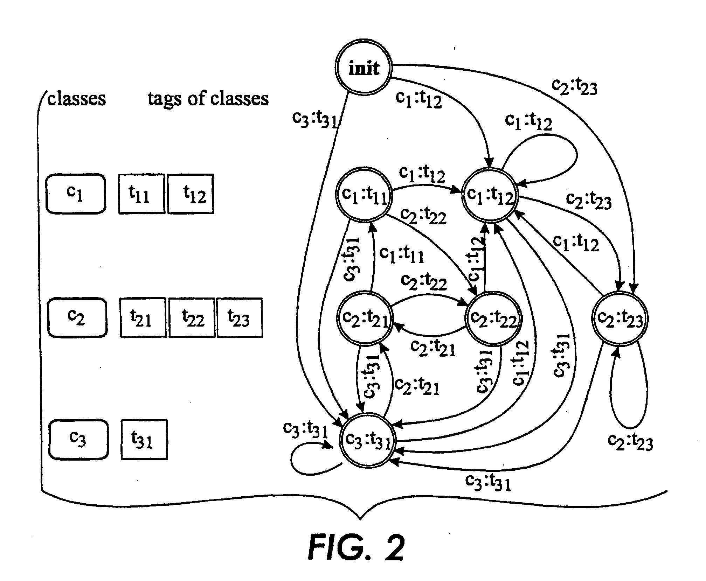

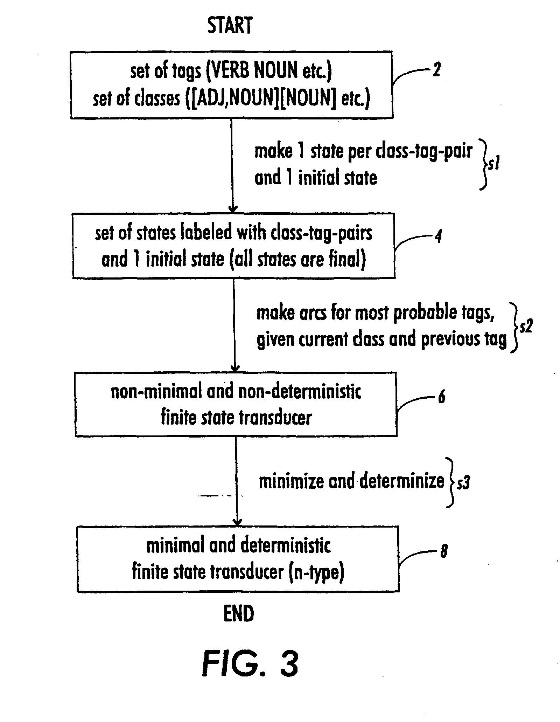

A transducer encoding this behaviour can be generated as illustrated in Fig. 2: this shows schematically an n-type transducer in accordance with an embodiment of the invention. In this example there is a set of three classes, $c_1$ with the two tags $t_{11}$ and $t_{12}$, $c_2$ with the three tags $t_{21}$, $t_{22}$ and $t_{23}$, and $c_3$ with one tag $t_{31}$. Different classes may contain the same tag, e.g. $t_{12}$ and $t_{23}$ may refer to the same tag (e.g. [NOUN]). Figure 3 illustrates the procedure of building an n-type transducer in accordance with an embodiment of the invention.

Starting with the set of tags and the set of classes (generally designated 2), for every possible pair of a class and a tag (e.g. $c_1$:$t_{12}$ or [ADJ,NOUN]:NOUN) a unique state is created (step s1) and labelled with this same pair. This set of states will allow to map any class to anyone of its tags. An initial state which does not correspond with any pair, is also created in step s1. All states are final, marked by double circles. This produces a set of states labelled with class-tag pairs and 1 initial state (generally designated 4).

For every state, as many outgoing arcs are created (step s2) as there are classes (three in Fig. 2). Each such arc for a particular class points to the most probable pair of this same class. The set of outgoing arcs of one state will allow to decide on the following tag, based on the following class and the current state's tag. If the arc comes from the initial state, the most probable pair of a class and a tag (destination state) is estimated by the initial and class probability of the tag:

$$\arg \max_k \; p_1(c_i, t_{ik}) = \pi(t_{ik}) \cdot b(c_i | t_{ik})$$

If the arc comes from a state other than the initial state, the most propable pair is estimated by the transition and class probability of the tag:

$$\arg \max_k \; p_2(c_i, t_{ik}) = a(t_{ik} | t_{previous}) \cdot b(c_i | t_{ik})$$

In the example (Fig. 2), $c_1$:$t_{12}$ is the most likely pair of class $c_1$, and $c_2$:$t_{23}$ the most likely pair of class $c_2$ when coming from the initial state, and $c_2$:$t_{21}$ the most likely pair of class $c_2$ when coming from the state of $c_3$:$t_{31}$.

Every arc is labelled with the same symbol pair as its destination state, with the class symbol in the upper language and the tag symbol in the lower language. E.g. every arc leading to the state of $c_1$ :$t_{12}$ is labelled with $c_1$:$t_{12}$. The result is the non-minimal and non-deterministic FST 6.

Finally, all state labels can be deleted since the behaviour described above is encoded in the arc labels and the network structure. The network can be minimised and determinised (step s3) to produce the n-type FST 8.

The above mathematical model is referred to as an *n1-type model,* the resulting finite-state transducer an *n1-type transducer* and the whole algorithm leading from the HMM to this transducer, an *n1-type approximation* of a first order HMM.

Adapted to a second order HMM, this algorithm would give an *n2-type approximation.*

Every *n-type* transducer is sequential, i.e. deterministic on the input side. In every state there is exactly one outgoing arc for every class symbol. An n-type transducer tags any corpus deterministically.

### D. s-Type Transducers

This section presents a method, according to another embodiment of the invention, that approximates a first order Hidden Markov Model (HMM) by a finite state transducer (FST), referred to herein as an s-type approximation.

### D.1 Mathematical Background

To tag a sentence i.e. to map its class sequence to the most probable tag sequence, one can split the class sequence at the unambiguous classes (containing one tag only) into subsequences, then tag them separately and concatenate them again. The result is equivalent to the one obtained by tagging the sentence as a whole.

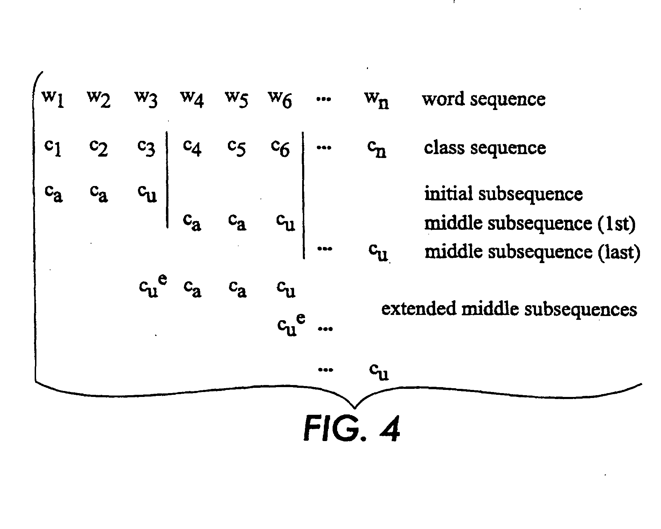

Figure 4 is a diagram illustrating class subsequences of a sentence. Two types of subsequences of classes are distinguished: initial and middle ones. The final subsequence of a sentence is equivalent to a middle one, if it is assumed that the sentence end symbol (. or ! or ?) always corresponds to an unambiguous class $c_u$.

An initial subsequence $C_i$ starts with the sentence initial position and has any numbsr (incl. zero) of ambiguous classes and ends with the first unambiguous class $c_u$ of the sentence. It can be described by the regular expression:

$$C_i = c_a{}^* \, c_u$$

Given an initial class subsequence $C_i$ of length $r$, its joint probability together with a corresponding initial tag subsequence $T_i$ can be estimated by:

$$p(C_i, T_i) = \pi(t_1) \cdot b(c_1|t_1) \cdot \left[ \prod_{j=2}^{r-1} a(t_j|t_{j-1}) \cdot b(c_j|t_j) \right] \cdot a(t_r|t_{r-1})$$

A middle subsequence $C_m$ starts immediately after an unambiguous class $c_u$, has any number (incl, zero) of ambiguous classes $c_a$ and ends with the following unambiguous class $c_u$. It can be described by the regular expression:

$$C_m = c_a{}^* \, c_u$$

To estimate the probability of middle tag sequences $T_m$ correctly, we have to include the immediately preceding unambiguous class $c_u{}^e$ actually belonging to the preceding subsequence $C_i$ or $C_m$. Thus we obtain an extended middle subsequence:

$$C_m{}^e = c_u{}^e \, c_a{}^* \, c_u$$

The joint probability of an extended middle class subsequence $C_m{}^e$ of length $s$ together with a corresponding tag subsequence $T_m{}^e$ can be estimated by

$$p(C_m^e, T_m^e) = \left[ \prod_{j=1}^{s-1} a(t_j|t_{j-1}) \cdot b(c_j|t_j) \right] \cdot a(t_s|t_{s-1})$$

### D.2 Building an s-type transducer

To build an s-type transducer, we generate a large number of initial class sequences $C_i$ and extended middle class sequences $C_m{}^e$ as described in D.3 below, and disambiguate (i.e. tag) each of them based on a first order HMM using the Viterbi algorithm for efficiency (Viterbi, 1967; Rabiner, 1990).

Every class subsequence gets linked to its most probable tag subsequence by means of the cross product operation:

$$S_i = C_i .x. T_i = c_1 : t_1 \qquad c_2 : t_2 \ldots\ldots c_n : t_n$$

$$S_m{}^e = C_m{}^e .x. T_m{}^e = c_1{}^e : t_1{}^e \qquad c_2 : t_2 \ldots\ldots c_n : t_n$$

Then the union $^U S_i$ of all initial subsequences $S_i$ and the union $^U S_m{}^e$ of all extended middle subsequences $S_m{}^e$ is built. In all extended middle subsequences $S_m{}^e$, like e.g.

$$S_m{}^e = \frac{C_m{}^e}{T_m{}^e} = \frac{[DET][ADJ,NOUN][ADJ,NOUN][NOUN]}{DET \quad\quad ADJ \quad\quad ADJ \quad\quad NOUN}$$

the first class symbol on the upper side and the first tag symbol on the lower side will be marked as an extension that does not really belong to the middle sequence but is necessary to disambiguate it correctly. The above example becomes

$$S_m{}^0 = \frac{C_m{}^0}{T_m{}^0} = \frac{0.[DET][ADJ,NOUN][ADJ,NOUN][NOUN]}{0.DET \quad\quad ADJ \quad\quad ADJ \quad\quad NOUN}$$

Now it is possible to formulate a preliminary sentence model containing one initial subsequence followed by any number (incl. zero) of extended middle subsequences:

$$^U S^0 = {}^U S_i \; {}^U S_m{}^0 *$$

where all middle subsequences $S_m{}^0$ are still marked and extended in the sense that all occurrences of all unambiguous classes are mentioned twice: Once at the end of every sequence (unmarked) and also at the beginning of every following sequence (marked).

To ensure a correct concatenation of initial and middle subsequences a concatenation constraint for classes is formulated:

$$R_c = \bigcap_j \; [\sim \$[\backslash c_u \; c_u^0]]_j$$

stating that every middle subsequence must begin with the same marked unambiguous class $c_j{}^0$ (e.g. 0.[DET]) that occurs unmarked as $c_u$ (e.g. [DET]) at the end of the preceding subsequence since both symbols refer to the same occurrence of this unambiguous class.

Having ensured correct concatenation by composition of the preliminary sentence model $^U S^0$ with the concatenation constraint $R_c$, all marked classes on the upper side and all marked tags on the lower side of the relation are deleted.

The above mathematical model is referred to as an *s-type model,* the corresponding finite-state transducer an *s-type transducer* and the whole algorithm leading from the HMM to the transducer, an *s-type approximation* of an HMM.

An s-type transducer tags any corpus that does not contain unknown subsequences exactly the same way, i.e. with the same errors, as the corresponding HMM tagger does. An s-type transducer is, however, incomplete because it encodes only a limited set of subsequences of ambiguity classes. Therefore an s-type transducer cannot tag sentences with one or more subsequences that are not in this set. An s-type transducer can be completed as described in D.4 below.

### D.3 Generation of ambiguity class subsequences

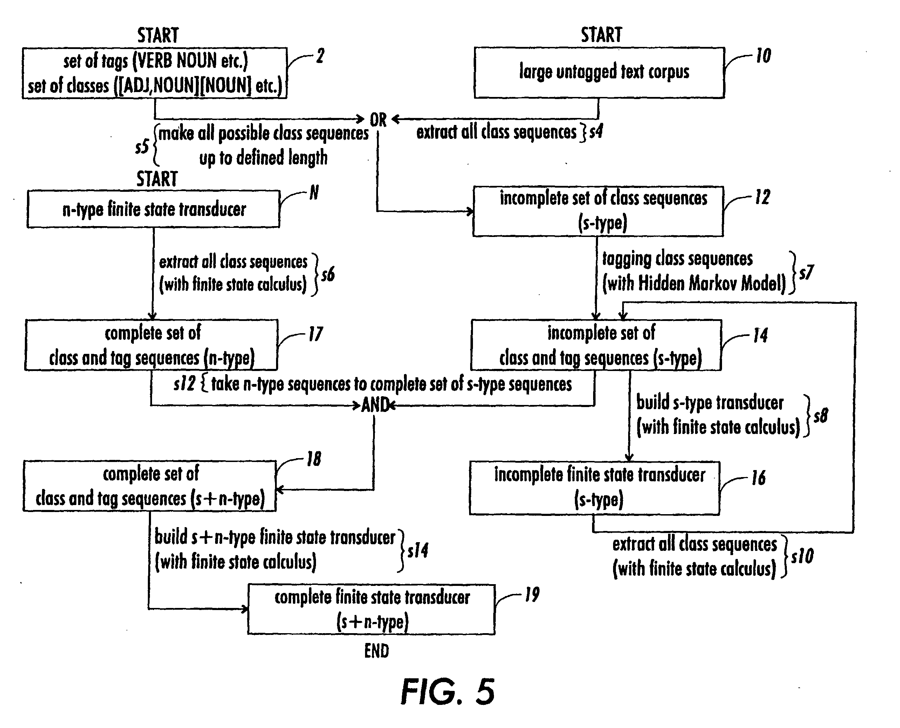

This section describes three ways to obtain class subsequences that are needed to build an s-type transducer. Figure 5 is a schematic diagram of the steps in the procedure of building an s-type transducer, in accordance with an alternative embodiment of the invention.

### (a) Extraction from a corpus

Based on a lexicon and a guesser an untagged training corpus (10) is annotated with class labels, exactly the same way as is done later for the purpose of tagging.

From every sentence we extract (step s4) the initial class subsequence $C_i$ that ends with the first unambiguous class $c_u$, and all extended middle subsequences $C_m^0$ ranging from any unambiguous class $c_u$ in the sentence to the following unambiguous class. This generates the incomplete set of class subsequences (s-type), designated 12.

### (b) Generation of all possible subsequences

Here, the set of tags and set of classes (generally designated 2) is used as the starting point. The set of all classes $c$ is split into the subset of unambiguous classes $c_u$ and the subset of ambiguous classes $c_a$. Then all possible initial and extended middle class subsequences, $C_i$ and $C_m^e$ up to a defined length are generated (step s5).

As in D.3(a), an incomplete set of class sequences (s-type) 12 is obtained, and the HMM can be used (step s7) to obtain from this an incomplete set of class and tag sequences (s-type) 14. This set 14 can be used with finite state calculus to build (step s8) an s-type transducer 16; and this incomplete s-type FST in turn is used to derive the incomplete set 14, through extraction (step s10) of all class sequences.

### (c) Extraction from a transducer

If an n-type transducer $N$ approximating an HMM is already available, initial and extended middle class and tag subsequences, $S_i$ and $S_m^e$ can be extracted (step s6) using finite state calculus, to produce a complete set 17 of class and tag sequences (n-type).

### D.4 Completion of s-type transducers

s-Type transducers with class subsequences that have been generated as described in D.3(a) or D.3(b) above, are in general not complete on the input side. They do not accept all possible ambiguity class sequences. This, however, is necessary for a transducer used to disambiguate class sequences of any corpus since a new corpus can contain sequences not encountered in the training corpus.

An incomplete s-type transducer Scan be completed (step s12) with subsequences from an auxiliary complete n-type transducer $N$ as follows:

First, the unions of initial and extended middle subsequences, $^U_sS_i$ and $^U_sS_m^e$ are extracted from the primary s-type transducer $S$, and the unions $^U_nS_i$ and $^U_nS_m^e$ are extracted from the auxiliary n-type transducer $N$, as described in section D.3(c) above.

Then a joint union $^US_i$ of initial subsequences is made:

$$^US_i = {}^U_sS_i \mid [\,[\,^U_nS_{i.}u - {}^U_sS_{i.}u\,]\,.o.\ ^U_nS_i\,]$$

and a joint union $^US_m^e$ of extended middle subsequences:

$$^US_m^e = {}^U_sS_m^e \mid [\,[\,^U_nS_m^e.u - {}^U_sS_m^e.u\,]\,.o.\ ^U_nS_m^e\,]$$

In both cases all subsequences from the principal model $S$ are unioned with all those subsequences from the auxiliary model $N$ that are not in $S$.

Finally, the complete *s+n-type* transducer 18 is generated (step s14) from the joint unions of subsequences $^US_i$ and $^US_m^e$, as described in section D.2 above.

A transducer completed in this way disambiguates all subsequences known to the principal incomplete s-type model exactly as the underlying HMM does, and all other subsequences as the auxiliary n-type model does.

### E. b-Type Transducers

This section presents a method, according to another embodiment of the invention, that approximates a first order Hidden Markov Model (HMM) by a finite-state transducer (FST), referred to herein as b-type approximation. Regular expression operators used in this section are explained in the annex.

### E.1 Basic Idea

Tagging of a sentence based on a (first order) HMM includes finding the most probable tag sequence given the class sequence of the sentence.

In this approach, an ambiguity class is disambiguated with respect to a context. A context consists of a sequence of ambiguity classes limited at both ends by some selected tag. For the left context of length $\beta$ we use the term *look-back,* and for the right context of length $\alpha$ we use the term *look-ahead*

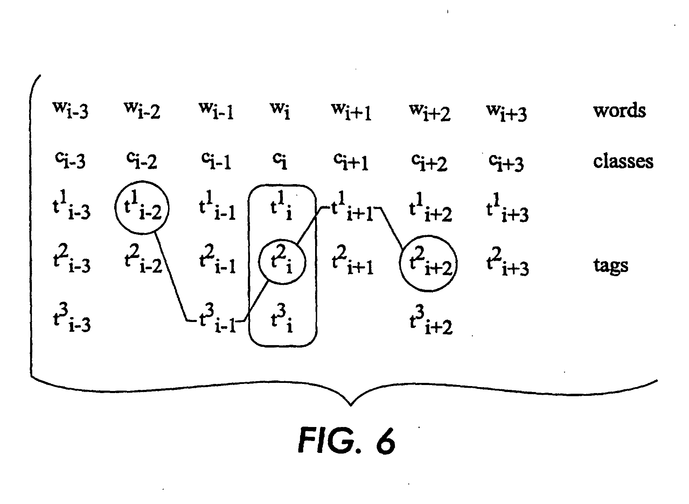

In Fig. 6, the tag $t^2_i$ can be selected from the class $c_i$ because it is between two selected tags which are $t^1_{i-2}$ at a look-back distance of $\beta=2$ and $t^2_{i+2}$ at a look-ahead distance of $\alpha=2$. Actually, the two selected tags $t^1_{i-2}$ and $t^2_{i+2}$ allow not only the disambiguation of the class $c_i$ but of all classes inbetween, i.e. $c_{i-1}$, $c_i$ and $c_{i+1}$.

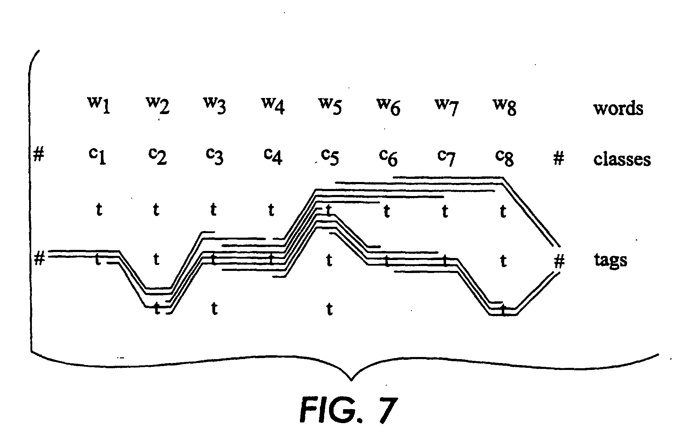

We approximate the tagging of a whole sentence by tagging sub-sequences with selected tags at both ends (Fig. 6), and then overlapping them. The most probable paths in the tag space of a sentence, i.e. valid paths according to this approach, can be found as sketched in Fig. 7. An ordered set of overlapping sequences where every sequence is shifted by one tag to the right with respect to the previous sequence, constitutes a valid path. There can be more than one valid path in the tag space of a sentence (Fig. 7). Sets of sequences that do not overlap in such a way are incompatible according to this model, and do not constitute valid paths.

### E.2 b-Type Sequences

Given a length $\beta$ of look-back and a length $\alpha$ of look-ahead, we generate for every class $c_0$, every look-back sequence $t_{-\beta}\, c_{-\beta+1} \ldots c_{-1}$, and every look-ahead sequence $c_1 \ldots c_{\alpha-1}\, t_\alpha$ , a b-type sequence:

$$t_{-\beta}\; c_{-\beta+1} \cdots c_{-1}\; c_0\; c_1 \cdots c_{\alpha-1}\; t_\alpha$$

For example:

CONJ [DET,PRON] [ADJ,NOUN,VERB] [NOUN,VERB] VERB

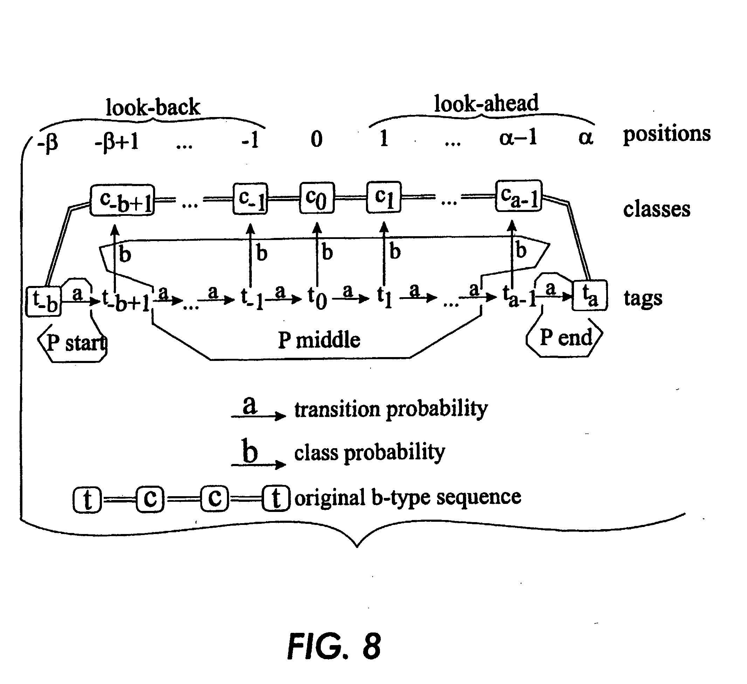

Each such *original b-type sequence* (Fig. 8) is disambiguated based on a first order HMM. Here we use the Viterbi algorithm (Viterbi, 1967; Rabiner, 1990) for efficiency.

The algorithm will be explained for a first order HMM. In the case of a second order HMM, b-type sequences must begin and end with two selected tags rather than one.

For an original *b-type sequence,* the joint probability of its class sequence $C$ with its tag sequence $T$(Fig. 8), can be estimated by:

$$p(C,T) = p(c_{-\beta+1} \ldots c_{\alpha-1}, t_{-\beta} \ldots t_\alpha) = \left[ \prod_{i=-\beta+1}^{\alpha-1} a(t_i|t_{i-1})\, b(c_i|t_i) \right] \cdot a(t_\alpha|t_{\alpha-1})$$

A boundary, i.e. a sentence beginning or end, may occur position in the look-sequence and in the look-ahead sequence. No look-back ($\beta=0$) or no look-ahead ($\alpha=0$) is allowed. The above probability estimation can then be expressed more generally (Fig. 8) as:

$$p(C,T) = p_{start} \cdot p_{middle} \cdot P_{end}$$

with $P_{start}$ being

$$p_{start} = a(t_{-\beta+1}|t_{-\beta})$$

for fixed tag $t_{-\beta}$

$$p_{start} = \pi(t_{-\beta+1})$$

for sentence beginning #

$$P_{start} = 1$$

for $\beta = 0$, i.e. no look-back
with $p_{middle}$ being

$$p_{middle} = b(c_{-\beta+1}|t_{-\beta+1}) \cdot \prod_{i=-\beta+2}^{\alpha-1} a(t_i|t_{i-1}) b(c_i|t_i)$$

for $\beta+\alpha > 0$

$$p_{middle} = b(c_0|t_0)$$

for $\beta+\alpha=0$
and with $P_{end}$ being

$$p_{end} = a(t_\alpha|t_{\alpha-1})$$

for fixed tag $t_\alpha$

$$p_{end} = 1$$

for sentence end # or $\alpha = 0$, i.e. no look-ahead

When the most likely tag sequence is found for an original b-type sequence, the class $c_0$ in the middle position is associated with its most likely tag $t_0$. We formulate constraints for the other tags $t_{-\beta}$ and $t_\alpha$ and classes $c_{-\beta+1} ... c_{-1}$ and $c_1 ... c_{\alpha-1}$ of the original b-type sequence. Thus we obtain a *tagged b-type sequence:*

$$t_{-\beta} \; c_{-\beta+1} \; ... \; c_{-1} \; c_0{:}t_0 \; c_1...c_{\alpha-1} \; t_\alpha$$

stating that $t_0$ is the most probable tag in the class $c_0$ if it is preceded by $t_{-\beta} \; c_{-\beta+1} \; ... \; c_{-1}$ and followed by $c_1 ... c_{\alpha-1} \; t_\alpha$.
In the example:

CONJ-B2 [DET.PRON]-B1 [ADJ,NOUN,VERB]:ADJ [NOUN,VERB]-A1 VERB-A2

ADJ is the most likely tag in the class [ADJ,NOUN,VERB] if it is preceded by the tag CONJ two positions back (B2), by the class [DET,PRON] one position back (B1), and followed by the class [NOUN,VERB] one position ahead (A1) and by the tag VERB two positions ahead (A2). Boundaries are denoted by a particular symbol, #, and can occur anywhere in the look-back and look-ahead. For example:

#-B2 [DET,PRON]-B1 [ADJ,NOUN,VERB]:ADJ [NOUN,VERB]-A1 VERB-A2

CONJ-B2 [DET,PRON]-B1 [ADJ,NOUN,VERB]:NOUN #-A1

Note that look-back length $\beta$ and look-ahead length $\alpha$ also include all sequences shorter than $\beta$ or $\alpha$, respectively, that are limited by a boundary #.

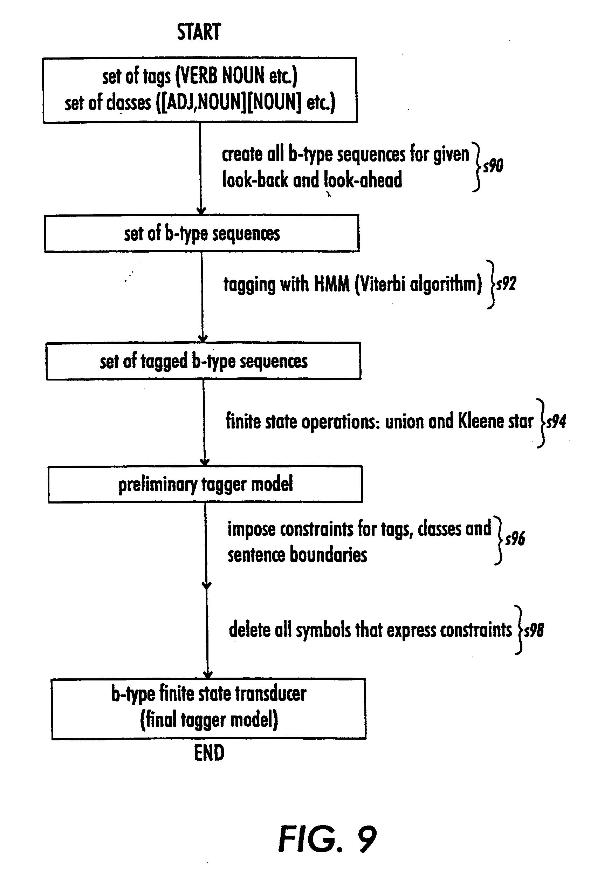

Figure 9 is a schematic diagram illustrating the steps in the procedure of building a b-type transducer, according to an embodiment of the invention.

For a given length p of look-back and a length $\alpha$ of look-ahead, and using the set of tags and the set of classes, every possible *original b-type sequence* is generated (step s90). Then, these are disambiguated statistically, and encoded it in a *tagged b-type sequence* $B_i$ as described above (Viterbi; step s92). All sequences $B_i$ are then unioned and a preliminary tagger model $B'$ generated (step s94):

$$B' = \left[ \bigcup_i B_i \right] *$$

where all sequences $B_i$ can occur in any order and number (including zero times) because no constraints have yet been applied.

### E.3 Concatenation Constraints

To ensure a correct concatenation of sequences, it is necessary to make sure that every sequence $B_i$ is preceded and followed by other $B_i$ according to what is encoded in the look-back and look-ahead which were explained above.

Constraints are created for preceding and following tags, classes and sentence boundaries. For the look-back, a particular tag $t_i$ or class $c_j$ is requested for a particular distance of $\delta \leq -1$, by:

$$R^\delta(t_i) = \sim[\sim[?*t_i[\backslash^\cup t]* [^\cup t [\backslash^\cup t]*]^\wedge (-\delta-1)\, t_i^{B(-\delta)} ?*]$$

$$R^\delta(c_j) = \sim[\sim[?*c_j [\backslash^\cup c]* [^\cup c [\backslash^\cup c]*]^\wedge (-\delta-1)\, c_j^{B(-\delta)} ?*]$$

for $\delta \leq -1$

with $^\cup t$ and $^\cup c$ being the union of all tags and all classes respectively. A sentence beginning, #, is requested for a particular look-back distance of $\delta \leq -1$, by:

$$R^\delta(\#) = \sim [\sim[[\backslash^\cup t] * [^\cup t [\backslash^\cup t]*]^\wedge(-\delta-1)\, \#^{B(-\delta)} ?*]$$

for $\delta \leq -1$

In the case of look-ahead, for a particular distance of $\delta \geq 1$, a particular tag $t_i$ or class $c_j$ or a sentence end # is required in a similar way, by:

$$R^\delta(t_i) = \sim[?*t_i^{A\delta} \sim[[\backslash^\cup t]* [^\cup t [\backslash^\cup t]*]^\wedge(\delta-1)\, t_i\, ?*]]$$

$$R^\delta(c_j) = \sim[?*c_j^{A\delta} \sim[[\backslash^\cup c]* [^\cup c [\backslash^\cup c]*]^\wedge(\delta-1)\, c_j\, ?*]]$$

$$R^\delta(\#) = \sim[?*\#^{A\delta} \sim[[\backslash^\cup t]* [^\cup t [\backslash^\cup t]*]^\wedge(\delta-1)]]$$

for $\delta \geq 1$

We create the intersection $R_t$ of all tag constraints R $^\delta(t_i)$, the intersection $R_c$ of all class constraints R $^\delta(c_j)$, and the intersection $R_\#$ of all sentence boundary constraints $R$ $^\delta(\#)$:

$$R_t = \bigcap_{\delta,i} R^\delta(t_i)$$

$$R_c = \bigcap_{\delta,j} R^\delta(c_j)$$

$$R_\# = \bigcap_\delta R^\delta(\#)$$

All constraints (for tags, classes and sentence boundaries) are enforced (step s96 in Fig. 9) by composition with the preliminary tagger model $B'$. The class constraint $R_c$ must be composed on the upper side of $B'$ which is the side of the classes, and both the tag constraint $R_t$ and the boundary constraint $R_\#$ must be composed on the lower side of $B'$ which is the side of the tags:

$$B'' = R_c \text{ .o. } B' \text{ .o. } R_t \text{ .o. } R\#$$

Having ensured correct concatenation, all symbols that have served to constrain tags, classes or boundaries are deleted (from $B''$)(step s98). Finally, the FST is determinized and minimized.

The above-mentioned mathematical model is referred to as a *b-type model,* the corresponding FST as *a b-type transducer,* and the whole algorithm leading from the HMM to the transducer, as a *b-type approximation* of an HMM.

### E.4 Properties of b-Type Transducers

There are two groups of b-type transducers with different properties: FSTs without look-back or without look-ahead and FSTs with both look-back and look-ahead. Both accept any sequence of ambiguity classes.

b-Type FSTs without look-back or without look-ahead are always sequential. They map a class sequence that corresponds to the word sequence of a sentence, always to exactly one tag sequence. Their tagging accuracy and similarity with the underlying HMM increases with growing look-back or look-ahead. A b-type FST with look-back $\beta=1$ and without look-ahead ($\alpha=0$) is equivalent to an n1-type FST (section C).

b-Type transducers with both look-back and look-ahead are in general not sequential. For a class sequence corresponding to the word sequence of a sentence, they deliver a set of alternative tag sequences, which means that the tagging results are ambiguous. This set is never empty, and the most probable tag sequence according to the underlying HMM is always in this set. The longer the look-back distance $\beta$ and the look-ahead distance $\alpha$ are, the larger the FST and the smaller the set of alternative tagging results. For sufficiently large look-back plus look-ahead, this set may contain always only one tagging result In this case the b-type FST is equivalent to the underlying HMM. For reasons of size however, this FST is only computable for HMMs with small tag sets.

### F. An Implemented Finite State Tagger

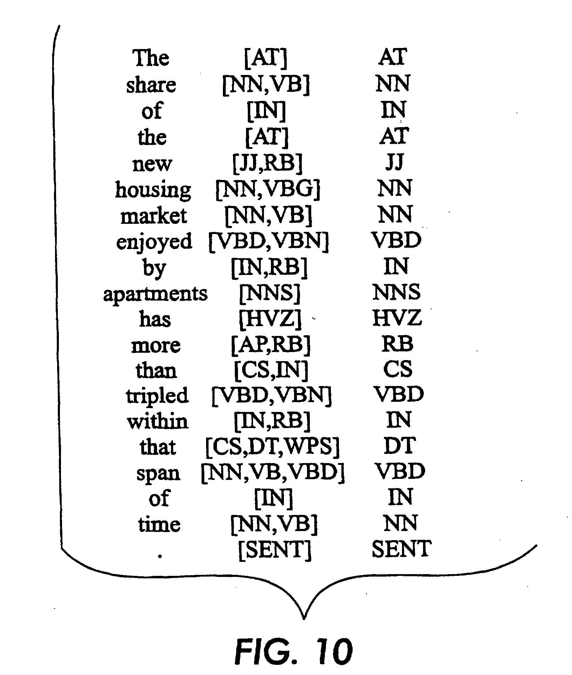

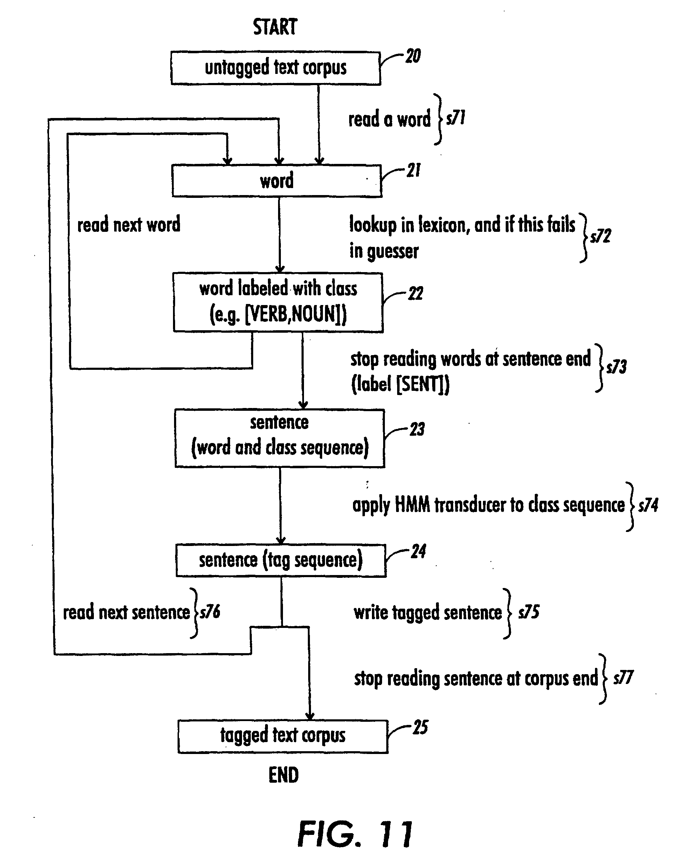

The implemented tagger requires three transducers which represent a lexicon, a guesser and an approximation of an HMM. Figure 10 is an illustration of the tagging of a sentence using either the n-type transducer of Fig. 3, the s-type transducer formed in Fig. 5 or the b-type transducer formed in Fig. 9. Figure 11 is a schematic flow chart of the steps involved in the procedure, in accordance with an embodiment of the invention, of tagging a text corpus 20 with a finite state tagger using an HMM transducer.

Every word 21 of an input sentence is read (step s71) from the corpus and is initially looked for in the lexicon; and if this fails, the search continues in the guesser (step s72), resulting in a word labelled with a class (22). As soon as an input token gets labelled with the sentence end class (e.g. [SENT] in Fig. 10), the tagger stops (step s73) reading words from the input. At that point the tagger has read and stored the words of a whole sentence (Fig. 6, col. 1) and generated the corresponding sequence of classes 23 (see Fig. 10, col. 2).

The class sequence 23 is now deterministically mapped (step s74) to a tag sequence 24 (see Fig. 10, col. 3) by means of the HMM transducer.

The tagger outputs (step s75) the stored word and tag sequence 24 of the sentence and continues (step s76) the same way with the remaining sentences of the corpus, stopping (step s77) when the end of the corpus is reached. The end result is the tagged text corpus 25.

## G. Tests and Results

Table 1 compares an n-type and an s-type transducer with the underlying HMM on an English test case. As expected, the transducers perform tagging faster than the HMM.

| | tagging accuracy in % | tagging speed on different computers in words/sec | | transducer size | |
|---|---|---|---|---|---|
| | | on ULTRA2 | on SPARC20 | num. states | num. arcs |
| HMM | 96.77 | 4 590 | 1 564 | none | none |
| s-type transducer | 95.05 | 12 038 | 5 453 | 4 709 | 976 785 |
| n-type transducer | 94.19 | 17 244 | 8 180 | 71 | 21 087 |

| | |
|---|---|
| Language: | English |
| HMM training corpus: | 19 944 words |
| Test corpus: | 19 934 words |
| Tag set: | 74 tags   297 classes |
| s-Type transducer | with subsequences from a training corpus of 100,000 words completed with subsequences from an n-type transducer |

Table 1: Accuracy, speed, size and creation time of HMM transducers

Since both transducers are approximations of HMMs, they show a slightly lower tagging accuracy than the HMMs. However, improvement in accuracy can be expected since these transducers can be composed with transducers encoding correction rules for frequent errors, as described above in the introductory part of this disclosure.

The s-type transducer is more accurate in tagging but also larger and slower than the n-type transducer.

Table 2 compares the tagging accuracy of n-type and s-type transducers and the underlying HMM for different languages.

| Tagging accuracy in % | | | | | | |
|---|---|---|---|---|---|---|
| | English | Dutch | French | German | Portug. | Spanish |
| HMM | 96.77 | 94.76 | 98.65 | 97.62 | 97.12 | 97.60 |
| s-type transducer | 95.05 | 92.36 | 98.37 | 95.81 | 96.56 | 96.87 |
| n-type transducer | 94.19 | 91.58 | 98.18 | 94.49 | 96.19 | 96.46 |

| s-Type transducer | with subsequences from a training corpus of 100,000 words completed with subsequences from n-type transducer |
|---|---|

**Table 2: Accuracy of HMM transducers for different languages**

For the test of b-type transducers we used an English corpus, lexicon and guesser, that originally were annotated with 74 different tags. We automatically recoded the tags in order to reduce their number, i.e. in some cases more than one of the original tags were recoded into one and the same new tag. We applied different recodings, thus obtaining English corpora, lexicons and guessers with reduced tag sets of 45, 36, 27, 18 and 9 tags respectively.

Table 3:

| Transducer or HMM | Accuracy test corp. in % | Tagging speed in words/ second | | Transducer size | | Creation time on Ultra2 |
|---|---|---|---|---|---|---|
| Accuracy, tagging speed and size of some HMM transducers | | | | | | |
| | | on Ultra2 | onSparc20 | num.of states | num.of arcs | |
| HMM | 97.07 | 3 358 | 1 363 | — | — | — |
| b-FST ($\beta=0,\alpha=0$) | 94.47 | 25 521 | 11 815 | 1 | 119 | 3 sec |
| b-FST ($\beta=1.\alpha=0$) | 95.60 | 25 521 | 12 038 | 28 | 3 332 | 4 sec |
| b-FST ($\beta=2,\alpha=0$) | 97.71 | 25 521 | 11 193 | 1 642 | 195 398 | 32 min |
| b-FST ($\beta=0,\alpha=1$) | 95.26 | 17 244 | 9 969 | 137 | 14 074 | 5 sec |
| b-FST ($\beta=0,\alpha=2$) | 95.37 | 19 939 | 9 969 | 3 685 | 280 545 | 3 min |
| b-FST ($\beta=1,\alpha=1$) | *96.78 | 16 790 | 8 986 | 1 748 | 192 275 | 19 sec |
| b-FST ($\beta=2,\alpha=1$) | *97.06 | 22 787 | 11 000 | 19 878 | 1 911 277 | 61 min |
| Language | English | | | | | |
| Corpora | 19 944 words for HMM training, 19 934 words for test | | | | | |
| Tag set | 27 tags, 119 classes | | | | | |
| * | Multiple, i.e. ambiguous tagging results: Only first result retained | | | | | |
| Types of FST (Finite State Transducers) | | | | | | |
| b ($\beta=2,\alpha=1$) | b-type transducer with look-back of 2 and look-ahead of 1 | | | | | |

Table 3:   (continued)

| Accuracy, tagging speed and size of some HMM transducers | | | | | |
|---|---|---|---|---|---|
| Transducer or HMM | Accuracy test corp. in % | Tagging speed in words/ second | | Transducer size | | Creation time on Ultra2 |
| | | on Ultra2 | onSparc20 | num.of states | num.of arcs | |
| Computers | | | | | | |
| Ultra2 | 1 CPU, 512 MBytes physical RAM, 1.4 GBytes virtual RAM | | | | | |
| Sparc20 | 1 CPU, 192 MBytes physical RAM, 827 MBytes virtual RAM | | | | | |

Table 3 compares b-type transducers with different length of look-back and look-ahead for a tag set of 27 tags. The highest accuracy (97.06 %) could be obtained with an b-type FST with $\beta=2$ and $\alpha=1$. This b-type FST produced in some cases ambiguous tagging results. Then only the first result found was retained.

| Transducer   or HMM | Tagging accuracy with tag sets of different sizes (in %) | | | | | |
|---|---|---|---|---|---|---|
| | 74 tags 297 cls. | 45 tags 214 cls. | 36 tags 181 cls. | 27 tags 119 cls. | 18 tags 97 cls. | 9 tags 67 cls. |
| HMM | 96.78 | 96.92 | 97.35 | 97.07 | 96.73 | 95.76 |
| b-FST ($\beta=0,\alpha=0$) | 83.53 | 83.71 | 87.21 | 94.47 | 94.24 | 93.86 |
| b-FST ($\beta=1,\alpha=0$) | 94.19 | 94.09 | 95.16 | 95.60 | 95.17 | 94.14 |
| b-FST ($\beta=2,\alpha=0$) | ____ | 94.28 | 95.32 | 95.71 | 95.31 | 94.22 |
| b-FST ($\beta=0,\alpha=1$) | 92.79 | 92.47 | 93.69 | 95.26 | 95.19 | 94.64 |
| b-FST ($\beta=0,\alpha=2$) | 93.46 | 92.77 | 93.92 | 95.37 | 95.30 | 94.80 |
| b-FST ($\beta=1,\alpha=1$) | *94.94 | *95.14 | *95.78 | *96.78 | *96.59 | *95.36 |
| b-FST ($\beta=2,\alpha=1$) | ____ | ____ | *97.34 | *97.06 | *96.73 | *95.73 |
| b-FST ($\beta=3,\alpha=1$) | ____ | ____ | ____ | ____ | ____ | 95.76 |

Language          English
Corpora           19 944 words for HMM training, 19 934 words for test
Types of FST (Finite State Transducers)          see Table 3
*          , Multiple, i.e. ambiguous tagging results: Only first result retained
☐          Transducer could not be computed for reasons of size.

Table 4: Tagging accuracy with tags sets of different sizes

Table 4 shows the tagging accuracy of different b-type transducers with tag sets of different sizes. To get results that are almost equivalent to those of an HMM, a b-type FST needs at least a look-back of $\beta=2$ and a look-ahead of $\alpha=1$ or vice versa. For reasons of size, this kind of FST could only be computed for the tag sets with 36 tags or less. A b-type FST with $\beta=3$ and $\alpha=1$ could only be computed for the tag set with 9 tags. This FST gave exactly the same tagging results as the underlying HMM.

## H. References

**Ait-Mokhtar,** Salah and Chanod, Jean-Pierre (1997). Incremental Finite-State Parsing. In: *Proceedings of the 5th Conference of Applied Natural Language Processing.* ACL, pp. 72-79. Washington, DC, USA.
**Bahl,** Lalit R. and Mercer, Robert L. (1976). Part of Speech Assignment by a Statistical Decision Algorithm. In: *IEEE intemational Symposium on Information Theory.* pp. 88-89. Ronneby.

**Brill,** Eric (1992). A Simple Rule-Based Part-of-Speech Tagger. In: *Proceedings of the 3rd Conference on Applied Natural Language Processing,* pp. 152-155. Trento, Italy.

**Chanod,** Jean-Pierre and Tapanainen, Pasi (1995). Tagging French - Comparing a Statistical and a Constraint Based Method. In: *Proceedings of the 7th conference of the EACL.* pp. 149-156. ACL. Dublin, Ireland.

**Church,** Kenneth W. (1988). A Stochastic Parts Program and Noun Phrase Parser for Unrestricted Text In: *Proceedings of the 2nd Conference on Applied Natural Language Processing.* ACL, pp. 136-143.

**Kaplan,** Ronald M. and Kay, Martin (1994). Regular Models of Phonological Rule Systems. In: *Computational Linguistics.* 20:3, pp. 331-378.

**Rabiner,** Lawrence R. (1990). *A Tutorial on Hidden Markov Models and Selected Applications in Speech Recognition. In: Readings in Speech Recognition* (eds. A. Waibel, K.F. Lee). Morgan Kaufmann Publishers, Inc. San Mateo, CA., USA.

**Viterbi,** A.J. (1967). Error Bounds for Convolutional Codes and an Asymptotical Optimal Decoding Algorithm. In: *Proceedings of IEEE,* vol. 61, pp. 268-278.

## Annex: Regular Expression Operators of the XEROX Finite State Calculus

Below, a and b designate symbols, A and B designate languages, and R and O designate relations between two languages. More details on the following operators and pointers to finite-state literature can be found in http: // www.rxrc.xerox.com/research/mltt/fst

| | |
|---|---|
| $A | **Contains**. Set of strings containing at least one occurrence of a string from **A** as a substring. |
| ~A | **Complement** (negation). All strings except those from **A**. |
| \a | Term complement. Any symbol other than **a**. |
| A* | **Kleene star.** Zero or more times **A** concatenated with itself. |
| A^n | **A n times**. Language **A** concatenated n times with itself. |
| A+ | **Kleene plus.** One or more times **A** concatenated with itself. |
| a -> b | **Replace.** Relation where every **a** on the upper side gets mapped to a **b** on the lower side. |
| a <- b | **Inverse replace**. Relation where every **b** on the lower side gets mapped to an **a** on the upper side. |
| a:b | **Symbol pair** with **a** on the upper and **b** on the lower side. |
| R.u | **Upper language** of the relation **R**. |
| R.1 | Lower language of the relation **R**. |
| R.i | **Inverse** relation where the upper and the lower language are exchanged with respect to **R**. |
| A B | **Concatenation** of all strings of **A** with all strings of **B**. |
| A \| B | **Union** of the languages **A** and **B**. |
| A & B | **Intersection** of the languages **A** and **B**. |
| A - B | **Relative complement** (minus). All strings of the language **A** that are not in **B**. |
| A .X. B | **Cross Product** (Cartesian product) of the languages **A** and **B**. |
| R .o. Q | **Composition** of the relations **R** and **Q**. |
| 0 or [ ] | **Empty string** (epsilon). |
| ? | **Any symbol** in the known alphabet and its extensions. |

**Claims**

**1.** A method for generating text tagging finite state transducers (FSTs) that include, along arcs, ordered pairs of labels, comprising:

(A) obtaining a set of tags ($t_{11},...;t_1,...;t_i{}^1{}_{-3},...$), each tag being a part-of-speech designator for a language, and

(B) using the set of tags to generate an FST (6, 8; 16, 19) for tagging words in the language,
**characterised in that** step (B) comprises:

(B1) obtaining a set of classes ($c_1,...; c_{i-3},...; c_0,...$) each class being an ambiguity class defining a group of possible tags for words in the language,

(B2) obtaining a plurality of states, including an initial state and, for each class-tag pair ($c_1:t_{11}, ...$), a further state labelled with the respective class-tag pair, and

(B3) for each state, creating an outgoing arc for each class ($c_1$,...), each outgoing arc being to a destination state labelled with a class-tag pair that includes the outgoing arc's class, the tag ($t_{11}$,...) of the destination state's class-tag pair being the one of the group of possible tags defined by the outgoing arc's class and being the possible tag that is most probable to follow the state from which the outgoing arc comes.

2. The method of claim 1, wherein (B3) comprises, where the state from which the outgoing arc comes is the initial state, determining the possible tag ($t_{11}$,...) that is most probable using

$$\arg\max_{k} p_1(c_i, t_{ik}) = \pi(t_{ik}) \cdot b(c_i | t_{ik})$$

where $\pi$ is initial probability, and b is class probability.

3. The method of claim I or 2, wherein (B3) comprises, where the state from which the outgoing arc comes is not the initial state, determining the possible tag ($t_{11}$, .. .) that is most probable using

$$\arg\max_{k} p_2(c_i, t_{ik}) = a(t_{ik} | t_{previous}) \cdot b(c_i | t_{ik})$$

where a is transition probability, and b is class probability.

4. The method of one of claims 1 to 3 further comprising minimising and determinising the FST (6) generated in (B).

5. A method for generating text tagging finite state transducers (FSTs) that include, along arcs, ordered pairs of labels, comprising:

   (A) obtaining a set of tags ($t_{11}$,..;$t_1$,...;$t_i{}^1{}_{-3}$,...), each tag being a part-of-speech designator for a language, and

   (B) using the set of tags to generate an FST (6, 8; 16, 19) for tagging words in the language, **characterized in that** step (B) comprises:

   (B1) obtaining a set of classes ($c_1$,...;$c_{i-3}$,...;$c_0$,...), each class being an ambiguity class defining a group of possible tags for words in the language,

   (B2) obtaining a set (12) of subsequences, the subsequences being sequences of the class sequence ($c_1$,...) to be tagged, the set not including all possible class sequences,

   (B3) tagging the class sequences in the set using a Hidden Markov Model (HMM), to produce a first set (14) of class-tag pair sequences,

   (B4) using an FST (N) whose arcs are labelled with class-tag pairs and which approximates the HMM to obtain a second set (17) of class-tag pair sequences,

   (B5) concatenating class-tag pair sequences from the first and second seb, respectively, to obtain a third set (18) of class-tag pair sequences, and

   (B6) generating an FST (19) according to the third set of class-tag pair sequences.

6. The method of claim 5, wherein (B2) comprises:
   using the set of tags ($t_1$,...) and the set of classes ($c_1$,...) to obtain all possible class sequences up to a defined length.

7. The method of claim 5, wherein (B2) comprises:

   annotating an untagged text corpus (10) with class labels, and
   extracting class sequences from the annotated untagged text corpus.

**8.** The method of one of claims 5 to 7, wherein (B4) comprises:
extracting all class sequences from the FST (N) whose arcs are labelled with class-tag pairs and which approximates the HMM.

**9.** A method for generating text tagging finite state transducers (FSTs) that include, along arcs, ordered pairs of labels, comprising:

(A) obtaining a set of tags ($t_{11}$,...; $t_1$,...;$t_i^1{}_{-3}$,...), each tag being a part-of-speech designator for a language, and

(B) using the set of tags to generate an FST (6, 8, 16, 19) for tagging words in the language, **characterized in that** step (B) comprises:

(B1) obtaining a set of classes ($c_1$,...;$c_{i-3}$,...;$c_0$,...), each class being an ambiguity class defining a group of possible tags for words in the language,

(B7) using the set of tags ($t^1{}_{t-3}$,...) and the set of classes ($c_0$,...) to obtain all possible preceding subsequences up to a given look-back length and all possible following subsequences up to a given look-ahead length and to obtain a set of sequences that includes, for every class, every sequence in which the class is preceded by one of the possible preceding subsequences and followed by one of the possible following subsequences,

(B8) for each of the sequences for each class, using a Hidden Markov Model to form a class-tag pair ($c_0$:$t_0$) that includes the sequence's class and that includes a tag that is in the sequence's class and that is most probable to be preceded by the sequence's preceding subsequence and to be followed by the sequence's following subsequence,

(B9) performing a concatenating operation on the set of sequences with class-tag pairs to generate a preliminary tagger model FST in which the sequences with class-tag pairs may appear in any order or in any number, and

(B10) composing one or more constraint FSTs representing a plurality of constraints with the preliminary tagger model FST to generate the FST for tagging words in the language, the constraints including constraints for tags, classes and sentence boundaries and ensuring a correct concatenation of sequences according to what is encoded in the look-back and look-ahead subsequences.

**10.** An FST apparatus for use in a text processing system, the FST apparatus comprising:
an FST (6, 8; 16, 19) for tagging words in a language, the FST being generated by the method of any preceding claim.

**11.** A method carried out in a text processing system that includes the FST apparatus of claim 10, for tagging an untagged text corpus (20), comprising:

(a) reading, in sequence, each word (21) of the text corpus,

(b) for each word, looking up the word using a lexical resource, to obtain the word labelled with its class (22),

(c) if a sentence end token has not been read, repeating steps (a) and (b), the sentence end token defining the end of the current sentence (23),

(d) if a sentence end token has been read, applying the FST of the FST apparatus to the class sequence corresponding to the current sentence, to generate a tag sequence (24), the tag sequence comprising a sequence of tags,

(e) outputting a tagged form of the current sentence, the tagged form comprising the or each word of the current sentence and, appended thereto, a respective tag from the tag sequence, and

(f) if the end of the text corpus has not been reached, repeating steps (a) - (e).

**12.** A text processing system when suitably programmed for carrying out the method of any of claims 1 through 9 and 11, the system comprising a processor and memory, the processor being operable with the memory for executing instructions corresponding to all of the steps of any of said methods.

**13.** A recordable medium having recorded thereon digital data defining instructions for execution by a processor and corresponding to all of the steps of any of the methods of any of claims 1 to 9.

**Patentansprüche**

**1.** Verfahren für die Erzeugung von Finite-Zustände-Transducer (FST) für Text-Tagging, die neben Bögen geordnete Paare von Etiketten einschließen, das die folgenden Schritte umfasst:

(A) Ermitteln einer Menge von Tags $(t_{11},...;t_{1},...;t^1_{i-3},...)$, wobei jedes Tag ein part-of-speech-Bezeichner für eine Sprache ist, und

(B) Verwenden der Menge von Tags, um einen FST (6, 8; 16, 19) für das Tagging von Worten in der Sprache zu erzeugen,
**dadurch gekennzeichnet, dass** der Schritt (B) umfasst:

(B1) Ermitteln einer Menge von Klassen $(c_1,...;c_{i-3},...;c_0,...)$, wobei jede Klasse eine Mehrdeutigkeitsklasse ist, die eine Gruppe von möglichen Tags für Worte in der Sprache definiert,

(B2) Ermitteln einer Vielzahl von Zuständen, einschließlich eines Anfangszustands, und für jedes Klasse-Tag-Paar $(c_1:t_{11},...)$ einen weiteren Zustand, der mit dem jeweiligen Klasse-Tag-Paar etikettiert ist; und

(B3) für jeden Zustand Erzeugen eines abgehenden Bogens für jede Klasse $(c_1...)$, wobei jeder abgehende Bogen zu einem Zielzustand mit einem Klasse-Tag-Paar etikettiert ist, das die Klasse des abgehenden Bogens enthält, und das Tag $(t_{11}...)$ des Klasse-Tag-Paares des Zielzustands dasjenige der Gruppe von möglichen Tags ist, das durch die Klasse des abgehenden Bogens definiert ist, und das das mögliche Tag ist, das am wahrscheinlichsten dem Zustand folgt, von dem aus der abgehende Bogen kommt.

**2.** Verfahren nach Anspruch 1, wobei (B3) enthält, dass dann, wenn der Ausgangszustand, von dem der abgehende Bogen kommt, der Anfangszustand ist, für die Bestimmung des möglichen Tag $(t_{11},...)$, das am wahrscheinlichsten ist, verwendet wird:

$$\arg\max_{k} p_1(c_i, t_{ik}) = \pi(t_{ik}) \cdot b(c_i|t_{ik})$$

wo $\pi$ die Anfangswahrscheinlichkeit und $b$ die Klassenwahrscheinlichkeit ist.

**3.** Verfahren nach Anspruch 1, wobei (B3) enthält, dass dann, wenn der Ausgangszustand, von dem der abgehende Bogen kommt, nicht der Anfangszustand ist, für die Bestimmung des möglichen Tag $(t_{11},...)$, das am wahrscheinlichsten ist, verwendet wird:

$$\arg\max_{k} p_2(c_i, t_{ik}) = a(t_{ik}|t_{voriges}) \cdot b(c_i|t_{ik})$$

wo $a$ die Übergangswahrscheinlichkeit und $b$ die Klassenwahrscheinlichkeit ist.

**4.** Verfahren nach irgendeinem der Ansprüche 1 bis 3, das ferner das Minimieren und Determinisieren des in (B) erzeugten FST enthält.

**5.** Verfahren für die Erzeugung von Finite-Zustände-Transducer (FST) für Text-Tagging, die neben Bögen geordnete Paare von Etiketten einschließen, das die folgenden Schritte umfasst:

(A) Ermitteln einer Menge von Tags $(t_{11},...;t_1,...;t^1{}_{i\text{-}3},...)$, wobei jedes Tag ein part-of-speech-Bezeichner für eine Sprache ist, und

(B) Verwenden der Menge von Tags, um einen FST (6, 8; 16, 19) für das Tagging von Worten in der Sprache zu erzeugen,
**dadurch gekennzeichnet, dass** der Schritt (B) umfasst:

(B1) Ermitteln einer Menge von Klassen $(c_1,...;c_{i\text{-}3},...;c_0,...)$, wobei jede Klasse eine Mehrdeutigkeitsklasse ist, die eine Gruppe von möglichen Tags für Worte in der Sprache definiert,

(B2) Ermitteln einer Menge von Untersequenzen, wobei die Untersequenzen Sequenzen der mit Tags zu versehenden Klassen-Sequenz $(c_1...)$ sind, und die Menge nicht alle möglichen Klassensequenzen enthält,

(B3) Erzeugen von Tags für die Sequenzen in der Menge unter Verwendung eines Hidden-Markov-Modells (HMM), um eine erste Menge (14) von Klasse-Tag-Paar-Sequenzen zu produzieren,

(B4) Verwenden eines FST (N), dessen Bögen mit Klasse-Tag-Paaren etikettiert sind, und das das HMM approximiert, um eine zweite Menge (17) von Klasse-Tag-Paar-Sequenzen zu ermitteln,

(B5) Verketten der Klasse-Tag-Paar-Sequenzen von der ersten bzw. der zweiten Menge, um eine dritte Menge (18) von Klasse-Tag-Paar-Sequenzen zu ermitteln, und

(B6) Erzeugen eines FST (19) entsprechend der dritten Menge von Klasse-Tag-Paar-Sequenzen.

6. Verfahren nach Anspruch 5, wobei (B2) enthält:
Verwenden der Menge von Tags $(t_1,...)$ und der Menge von Klassen $(c_1,...)$, um alle möglichen Klassen-Sequenzen bis zu einer definierten Länge zu ermitteln.

7. Verfahren nach Anspruch 5, wobei (B2) enthält:
Etikettieren eines nicht mit Tags versehenen Textkorpus (10) mit Klassen-Etiketten, und Herausziehen der Klassen-Sequenzen aus dem etiketierten Textkorpus ohne Tags.

8. Verfahren nach einem der Ansprüche 5 bis 7, wobei (B4) enthält:
Herausziehen aller Klassen-Sequenzen aus dem FST (N), dessen Bögen mit Klasse-Tag-Paaren etikettiert sind und das das HMM approximiert.

9. Verfahren für die Erzeugung von Finite-Zustände-Transducer (FST) für Text-Tagging, die neben Bögen geordnete Paare von Etiketten einschließen, das die folgenden Schritte umfasst:

(A) Ermitteln einer Menge von Tags $(t_{11},...;t_1,...;t^1{}_{i\text{-}3},...)$, wobei jedes Tag ein part-of-speech-Bezeichner für eine Sprache ist, und

(B) Verwenden der Menge von Tags, um einen FST (6, 8; 16, 19) für das Tagging von Worten in der Sprache zu erzeugen,
**dadurch gekennzeichnet, dass** der Schritt (B) umfasst:

(B1) Ermitteln einer Menge von Klassen $(c_1,...;c_{i\text{-}3},...;c_0,...)$, wobei jede Klasse eine Mehrdeutigkeitsklasse ist, die eine Gruppe von möglichen Tags für Worte in der Sprache definiert,

(B7) Verwenden der Menge von Tags $(t^1{}_{i\text{-}3},...)$ und der Menge von Klassen $(C_0....)$, um alle möglichen vorangehenden Untersequenzen bis zu einer gegebenen Rückschaulänge und alle möglichen folgenden Untersequenzen bis zu einer gegebenen Vorschaulänge zu ermitteln, und eine Menge von Sequenzen zu ermitteln, die für jede Klasse jede Sequenz enthält, in der der Klasse eine der möglichen vorangehenden Untersequenzen vorangeht und in der die Klasse von einer der möglichen nachfolgenden Untersequenzen gefolgt wird,

(B8) für jede der Sequenzen und für jede Klasse Verwenden eines Hidden-Markov-Modells, um ein Klasse-

Tag-Paar ($c_0$:$t_0$) zu bilden, das die Klasse der Sequenz enthält, und das ein Tag enthält, das in der Klasse der Sequenz ist und das das wahrscheinlichste ist, dem die der Sequenz vorangehende Untersequenz vorangeht, und das von der der Sequenz nachfolgenden Untersequenz gefolgt wird,

(B9) Durchführen einer Verkettungsoperation auf der Menge der Sequenzen mit Klasse-Tag-Paaren, um ein vorläufiges Tagger-Modell-FST zu erzeugen, in dem die Sequenzen mit Klasse-Tag-Paaren in irgendeiner Reihenfolge und irgendeiner Anzahl auftreten können, und

(B10) Bilden eines oder mehrerer Beschränkungs-FST, die eine Vielzahl von Beschränkungen darstellen, aus dem vorläufigen Tagger-Modell-FST, um das FST für das Tagging von Worten in der Sprache zu erzeugen, wobei die Beschränkungen Beschränkungen für Tags, Klassen und Satzgrenzen enthalten und eine korrekte Verkettung von Sequenzen entsprechend dem abzusichern, was in den Rückschau- und Vorschau-Untersequenzen codiert ist.

10. FST-Apparat für die Verwendung in einem Textverarbeitungssystem, der umfasst:
einen FST (6, 8; 16, 19) für das Tagging von Worten in einer Sprache, wobei der FST durch das Verfahren von irgendeinem der vorangehenden Ansprüche erzeugt wird.

11. Verfahren, das in einem Testverarbeitungssystem ausgeführt wird, welches den FST-Apparat von Anspruch 10 einschließt, für das Tagging eines Textkorpus (20) ohne Tags, das umfasst:

(a) satzweises Lesen eines jeden Wortes (21) des Textkorpus;

(b) für jedes Wort Nachschlagen des Wortes unter Verwendung eines lexikalischen Hilfsmittels, um das Wort mit dem Etikett seiner Klasse zu ermitteln (22);

(c) falls ein Satzendezeichen noch nicht gelesen worden ist, Wiederholen der Schritte (a) und (b), wobei das Satzendezeichen das Ende des gegenwärtigen Satzes definiert (23),

(d) falls ein Satzendezeichen gelesen worden ist, Anwenden des FST von dem FST-Apparat auf die Klassen-Sequenz, die mit dem gegenwärtigen Satz korrespondiert, um eine Tag-Sequenz zu erzeugen (24), wobei die Tag-Sequenz eine Sequenz von Tags ist,

(e) Ausgabe einer Form des gegenwärtigen Satzes mit Tags, wobei die Form mit Tags das oder jedes Wort des gegenwärtigen Satzes und daran angehängt ein jeweiliges Tag von der Tag-Sequenz enthält, und

(f) falls das Ende des Textkorpus noch nicht erreicht worden ist, Wiederholen der Schritte (a) bis (e).

12. Textverarbeitungssystem, das bei für die Ausführung des Verfahrens nach irgendeinem der Ansprüche 1 bis 9 und 11 geeigneter Programmierung einen Prozessor und einen Speicher enthält, wobei der Prozessor mit dem Speicher betrieben wird für die Ausführung von Anweisungen, die mit allen Schritten von irgendeinem der Verfahren korrespondieren.

13. Beschreibbares Medium mit darauf aufgezeichneten digitalen Daten, die Anweisungen für die Ausführung durch einen Prozessor definieren, und die mit allen den Schritten von irgendeinem der Ansprüche 1 bis 9 korrespondieren.

**Revendications**

1. Procédé de génération de transducteurs à états finis (FSTs) d'étiquetage de texte qui comprennent, le long d'arcs, des paires ordonnées d'étiquettes, comprenant :

(A) l'obtention d'un ensemble d'étiquettes ($t_{11}$,... ; $t_1$, ... ; $t_i{}^1{}_{-3}$, ...), chaque étiquette constituant un désignateur de partie de parole pour une langue, et
(B) l'utilisation de l'ensemble d'étiquettes pour générer un transducteur FST (6, 8 ; 16, 19) afin d'étiqueter des mots dans la langue,
**caractérisé en ce que** l'étape (B) comprend :

(B1) l'obtention d'un ensemble de classes ($c_1$... ; $c_{i-3}$,... ; $c_0$, ...), chaque classe constituant une classe d'ambiguïté définissant un groupe d'étiquettes possibles pour des mots dans la langue,

(B2) l'obtention d'une pluralité d'états, comprenant un état initial et, pour chaque paire classe-étiquette ($C_1$ : $t_{11}$, ...), un autre état étiqueté avec la paire classe-étiquette respective, et

(B3) pour chaque état, la création d'un arc sortant pour chaque classe ($c_1$, ...), chaque arc sortant allant vers un état de destination étiqueté avec une paire classe-étiquette qui comprend la classe de l'arc sortant, l'étiquette ($t_{11}$, ...) de la paire classe-étiquette de l'état de destination constituant celle du groupe des étiquettes possibles définies par la classe de l'arc sortant et constituant l'étiquette possible qui est la plus probable pour succéder à l'état duquel provient l'arc sortant.

2. Procédé selon la revendication 1, dans lequel (B3) comprend, lorsque l'état duquel provient l'arc sortant à l'état initial, la détermination de l'étiquette possible ($t_{11}$,...) qui est la plus probable en utilisant

$$\arg \max_{k} p_1(c_i, t_{ik}) = \pi(t_{ik}) \cdot b(c_i \mid \mathcal{T}_{IK})$$

où $\pi$ est une probabilité initiale, et $b$ est une probabilité de classe.

3. Procédé selon la revendication 1 ou 2, dans lequel (B3) comprend, lorsque l'état à partir duquel provient l'arc sortant n'est pas à l'état initial, la détermination de l'étiquette possible ($t_{11}$,...) qui est la plus probable en utilisant

$$\arg \max_{k} p_2(c_i, t_{ik}) = a(t_{ik} \mid t_{précédente}) \cdot b(c_i \mid t_{ik})$$

où $a$ est une probabilité de transition, et $b$ est une probabilité de classe.

4. Procédé selon l'une des revendications 1 à 3, comprenant en outre la minimisation et la détermination du transducteur FST (6) généré en (B).

5. Procédé de génération de transducteurs à états finis d'étiquetage de texte (FST) qui comprennent, le long d'arcs, des paires ordonnées d'étiquettes, comprenant :

(A) l'obtention d'un ensemble d'étiquettes ($t_{11}$,... ; $t_1$,... ; $t_i{}^1{}_{-3}$,...), chaque étiquette constituant un désignateur de partie de parole pour une langue, et

(B) l'utilisation de l'ensemble d'étiquettes pour générer un transducteur FST (6, 8 ; 16, 19) afin d'étiqueter des mots dans la langue,

**caractérisé en ce que** l'étape (B) comprend :

(B1) l'obtention d'un ensemble de classes ($c_1$,...; $c_{i-3}$, ... ; $c_0$,...), chaque classe constituant une classe d'ambiguïté définissant un groupe d'étiquettes possibles pour des mots dans la langue,

(B2) l'obtention d'un ensemble (12) de sous-séquences, les sous-séquences étant des séquences de la séquence de classe ($c_1$, ) à étiqueter, l'ensemble ne comprenant pas toutes les séquences possibles de la classe,

(B3) l'étiquetage des séquences de classes de l'ensemble en utilisant un modèle de Markov caché (HMM), pour produire un premier ensemble (14) de séquences de paires classe-étiquette,

(B4) l'utilisation d'un transducteur FST (N) dont les arcs sont étiquetés avec des paires classe-étiquette, et qui réalise une approximation du modèle HMM afin d'obtenir un second ensemble (17) des séquences de paires classe-étiquette,

(B5) la concaténation des séquences de paires classe-étiquette à partir des premier et second ensembles, respectivement, pour obtenir un troisième ensemble (18) de séquences de paires classe-étiquette, et

(B6) la génération d'un transducteur FST (19) conformément au troisième ensemble de séquences de paires classe-étiquette.

6. Procédé selon la revendication 5, dans lequel l'étape (B2) comprend :

l'utilisation de l'ensemble d'étiquettes ($t_1$,...) et de l'ensemble de classes ($C_1$, ...) pour obtenir toutes les séquences de classes possibles jusqu'à une longueur définie.

**7.** Procédé selon la revendication 5, dans lequel l'étape (B2) comprend :

l'annotation d'un corpus de texte non étiqueté (10) avec des étiquettes de classes, et l'extraction des séquences de classes à partir du corpus de texte non étiqueté annoté.

**8.** Procédé selon l'une des revendications 5 à 7, dans lequel l'étape (B4) comprend :

l'extraction de toutes les séquences de classes du transducteur FST (N) dont les arcs sont étiquetés avec des paires classe-étiquette et qui réalisent une approximation du modèle HMM.

**9.** Procédé de génération de transducteurs à états finis (FST) d'étiquetage de texte qui comprennent, le long d'arcs, des paires ordonnées d'étiquettes, comprenant :

(A) l'obtention d'un ensemble d'étiquettes ($t_{11}$, ...; $t_1$,... ; $t_i 1_{-3}$,...), chaque étiquette constituant un désignateur de partie de parole pour une langue, et

(B) l'utilisation de l'ensemble d'étiquettes pour générer un transducteur FST (6, 8, 16, 19) afin d'étiqueter des mots dans la langue,

**caractérisé en ce que** l'étape (B) comprend :

(B1) l'obtention d'un ensemble de classes ($c_1$, ... ; $C_{i-3}$, ... ; $C_0$, ...), chaque classe constituant une classe d'ambiguïté définissant un groupe d'étiquettes possibles pour des mots dans la langue,

(B7) l'utilisation de l'ensemble d'étiquettes ($t_i 1_{-3}$, ...) et de l'ensemble de classes ($c_0$, ...) pour obtenir toutes les sous-séquences précédentes possibles jusqu'à une longueur de recherche en arrière donnée et toutes les sous-séquences suivantes possibles jusqu'à une longueur d'anticipation donnée et afin d'obtenir un ensemble de séquences qui comprend, pour chaque classe, chaque séquence dans laquelle la classe est précédée par l'une des sous-séquences précédentes possibles et suivie de l'une des sous-séquences suivantes possibles.

(B8) pour chacune des séquences pour chaque classe, l'utilisation d'un modèle de Markov caché pour former une paire classe-étiquette ($c_0 : t_0$) qui comprend la classe de la séquence et qui comprend une étiquette qui figure dans la classe de la séquence et qui est la plus probable pour être précédée par la sous-séquence précédente de la séquence et pour être suivie par la sous-séquence suivante de la séquence,

(B9) l'exécution d'une opération de concaténation sur l'ensemble des séquences avec des paires classe-étiquette afin de générer un transducteur FST de modèle d'étiquetage préliminaire, dans lequel les séquences avec des paires classe-étiquette peuvent apparaître dans un ordre quelconque ou en un nombre quelconque, et

(B10) la composition de un ou plusieurs transducteurs FST de contrainte représentant une pluralité de contraintes avec le transducteur FST de modèle d'étiquetage préliminaire pour générer le transducteur FST afin d'étiqueter des mots dans la langue, les contraintes comprenant des contraintes pour les étiquettes, les classes et les limites de phrase et pour assurer une concaténation correcte des séquences, conformément à ce qui est codé dans les sous-séquences de recherche en arrière et d'anticipation.

**10.** Dispositif de transducteur FST destiné à être utilisé dans un système de traitement de texte, le dispositif de transducteur FST comprenant :

un transducteur FST (6, 8 ; 16, 19) destiné à étiqueter des mots dans une langue, le transducteur FST étant généré par le procédé selon l'une quelconque des revendications précédentes.

**11.** Procédé exécuté dans un système de traitement de texte qui comprend le dispositif de transducteur FST selon la revendication 10, destiné à étiqueter un corpus de texte non étiqueté (20), comprenant :

(a) la lecture, en séquence, de chaque mot (21) du corpus de texte,

(b) pour chaque mot, la recherche du mot en utilisant une ressource lexicale, afin d'obtenir le mot étiqueté avec sa classe (22),

(c) si un jeton de fin de phrase n'a pas été lu, répéter les étapes (a) et (b), le jeton de fin de phrase définissant la fin de la phrase en cours (23),

(d) si un jeton de fin de phrase a été lu, appliquer le transducteur FST du dispositif de transducteur FST à la séquence de classe correspondant à la phrase en cours, afin de générer une séquence d'étiquetage (24), la séquence d'étiquetage comprenant une séquence d'étiquettes,

(e) la sortie d'une forme étiquetée de la phrase en cours, la forme étiquetée comprenant le mot ou chaque mot de la phrase en cours et, ajoutée celle-ci, une étiquette respective provenant de la séquence d'étiquetage, et

(f) si la fin du corpus de texte n'a pas été atteinte, répéter les étapes (a) à (e).

12. Système de traitement de texte, lorsqu'il est programmé de façon appropriée pour exécuter le procédé selon l'une quelconque des revendications 1 à 9 et 11, le système comprenant un processeur et une mémoire, le processeur pouvant être mis en oeuvre avec la mémoire en vue d'exécuter des instructions correspondant à toutes les étapes selon l'un quelconque desdits procédés.

13. Support enregistrable comportant des données numériques enregistrées sur celui-ci définissant des instructions en vue d'une exécution par un processeur et correspondant à toutes les étapes de l'un quelconque des procédés selon l'une quelconque des revendications 1 à 9.

$$w_1 \quad w_2 \quad w_3 \quad w_4 \quad \cdots \quad w_n \qquad \text{word sequence}$$

$$c_1 \quad c_2 \quad c_3 \quad c_4 \quad \cdots \quad c_n \qquad \text{class sequence}$$

$$t_{11} \quad t_{21} \quad t_{31} \quad t_{41} \quad \quad \quad t_{n1}$$

possible tags

$$t_{12} \rightarrow t_{22} \quad \quad \quad t_{42} \quad \quad t_{n2}$$

$$t_{23}$$

# FIG. 1

**FIG. 2**

START

set of tags (VERB NOUN etc.)
set of classes ([ADJ,NOUN][NOUN] etc.) — 2

make 1 state per class-tag-pair
and 1 initial state } s1

set of states labeled with class-tag-pairs
and 1 initial state (all states are final) — 4

make arcs for most probable tags,
given current class and previous tag } s2

non-minimal and non-deterministic
finite state transducer — 6

minimize and determinize } s3

minimal and deterministic
finite state transducer (n-type) — 8

END

# FIG. 3

$$
\begin{array}{cccccccl}
w_1 & w_2 & w_3 & w_4 & w_5 & w_6 & \cdots & w_n & \text{word sequence} \\
c_1 & c_2 & c_3 & c_4 & c_5 & c_6 & \cdots & c_n & \text{class sequence} \\
c_a & c_a & c_u & & & & & & \text{initial subsequence} \\
& & & c_a & c_a & c_u & & & \text{middle subsequence (1st)} \\
& & & & & & \cdots & c_u & \text{middle subsequence (last)} \\
& & c_u{}^e & c_a & c_a & c_u & & & \\
& & & & & c_u{}^e & \cdots & & \text{extended middle subsequences} \\
& & & & & & \cdots & c_u &
\end{array}
$$

## FIG. 4

START

| set of tags (VERB NOUN etc.) set of classes ([ADJ,NOUN][NOUN] etc.) | ~2 |

START

| large untagged text corpus | ~10 |

s5 { make all possible class sequences up to defined length

OR

extract all class sequences } s4

START

| n-type finite state transducer | ~N |

| incomplete set of class sequences (s-type) | ~12 |

extract all class sequences (with finite state calculus) } s6

tagging class sequences (with Hidden Markov Model) } s7

| complete set of class and tag sequences (n-type) | ~17 |

| incomplete set of class and tag sequences (s-type) | ~14 |

s12 { take n-type sequences to complete set of s-type sequences

AND

build s-type transducer (with finite state calculus) } s8

| complete set of class and tag sequences (s+n-type) | ~18 |

| incomplete finite state transducer (s-type) | ~16 |

build s+n-type finite state transducer (with finite state calculus) } s14

extract all class sequences (with finite state calculus) } s10

| complete finite state transducer (s+n-type) | ~19 |

END

*FIG. 5*

EP 0 992 008 B1

$$w_{i-3} \quad w_{i-2} \quad w_{i-1} \quad w_i \quad w_{i+1} \quad w_{i+2} \quad w_{i+3} \qquad \text{words}$$

$$c_{i-3} \quad c_{i-2} \quad c_{i-1} \quad c_i \quad c_{i+1} \quad c_{i+2} \quad c_{i+3} \qquad \text{classes}$$

$$t^1_{i-3} \quad t^1_{i-2} \quad t^1_{i-1} \quad t^1_i \quad t^1_{i+1} \quad t^1_{i+2} \quad t^1_{i+3}$$

$$t^2_{i-3} \quad t^2_{i-2} \quad t^2_{i-1} \quad t^2_i \quad t^2_{i+1} \quad t^2_{i+2} \quad t^2_{i+3} \qquad \text{tags}$$

$$t^3_{i-3} \quad \quad t^3_{i-1} \quad t^3_i \quad \quad t^3_{i+2}$$

## FIG. 6

FIG. 7

FIG. 8

START

```
┌─────────────────────────────────────────────┐
│        set of tags (VERB NOUN etc.)          │
│   set of classes ([ADJ,NOUN][NOUN] etc.)     │
└─────────────────────────────────────────────┘
                      │
                      │   create all b-type sequences for given  } s90
                      │   look-back and look-ahead
                      ▼
┌─────────────────────────────────────────────┐
│           set of b-type sequences            │
└─────────────────────────────────────────────┘
                      │
                      │   tagging with HMM (Viterbi algorithm) } s92
                      ▼
┌─────────────────────────────────────────────┐
│        set of tagged b-type sequences        │
└─────────────────────────────────────────────┘
                      │
                      │   finite state operations: union and Kleene star } s94
                      ▼
┌─────────────────────────────────────────────┐
│            preliminary tagger model          │
└─────────────────────────────────────────────┘
                      │
                      │   impose constraints for tags, classes and } s96
                      │   sentence boundaries
                      ▼
                      │
                      │   delete all symbols that express constraints } s98
                      ▼
┌─────────────────────────────────────────────┐
│         b-type finite state transducer       │
│            (final tagger model)              │
└─────────────────────────────────────────────┘
```

END

# FIG. 9

| | | |
|---|---|---|
| The | [AT] | AT |
| share | [NN,VB] | NN |
| of | [IN] | IN |
| the | [AT] | AT |
| new | [JJ,RB] | JJ |
| housing | [NN,VBG] | NN |
| market | [NN,VB] | NN |
| enjoyed | [VBD,VBN] | VBD |
| by | [IN,RB] | IN |
| apartments | [NNS] | NNS |
| has | [HVZ] | HVZ |
| more | [AP,RB] | RB |
| than | [CS,IN] | CS |
| tripled | [VBD,VBN] | VBD |
| within | [IN,RB] | IN |
| that | [CS,DT,WPS] | DT |
| span | [NN,VB,VBD] | VBD |
| of | [IN] | IN |
| time | [NN,VB] | NN |
| . | [SENT] | SENT |

## FIG. 10

START

untagged text corpus — 20

read a word } s71

word — 21

read next word

lookup in lexicon, and if this fails } s72
in guesser

word labeled with class — 22
(e.g. [VERB,NOUN])

stop reading words at sentence end } s73
(label [SENT])

sentence — 23
(word and class sequence)

apply HMM transducer to class sequence } s74

sentence (tag sequence) — 24

read next sentence } s76

write tagged sentence } s75

stop reading sentence at corpus end } s77

tagged text corpus — 25

END

# FIG. 11